(19) Europäisches Patentamt
European Patent Office
Office européen des brevets

(11) **EP 4 428 058 A2**

(12) **EUROPEAN PATENT APPLICATION**

(43) Date of publication:
**11.09.2024 Bulletin 2024/37**

(21) Application number: **24184046.1**

(22) Date of filing: **10.05.2019**

(51) International Patent Classification (IPC):
**B65D 83/04** $^{(2006.01)}$

(52) Cooperative Patent Classification (CPC):
**B65D 85/72; A47J 31/3657; B65D 65/466; B65D 75/323; B65D 83/0472; B65D 85/804**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2018 EP 18172019**

(62) Document number(s) of the earlier application(s) in accordance with Art. 76 EPC:
**19722621.0 / 3 793 914**

(71) Applicant: **Société des Produits Nestlé S.A.
1800 Vevey (CH)**

(72) Inventor: **MAGATTI, Marco
1010 Lausanne (CH)**

(74) Representative: **Rosolen-Delarue, Katell
Société des Produits Nestlé S.A.
Avenue Nestlé 55
1800 Vevey (CH)**

Remarks:
This application was filed on 24.06.2024 as a divisional application to the application mentioned under INID code 62.

(54) **PACKAGE FOR STORING PORTIONS OF BEVERAGE PRECURSOR FOR PREPARING A BEVERAGE THEREFROM**

(57) A package (1) containing portions of beverage precursor for the preparation of a beverage in a beverage preparation device by mixing liquid with at least one portion of the beverage precursor in the form of a portioning band (3) comprising a pair of packaging sheets (4, 5) sealed to one another for enclosing and sealing the portions individually and separately wherein the beverage precursor portions (2) are covered on each side (9, 10) of the band by a sheet (4, 5) being formed with cavities (16, 17) to receive a part of each portion and are sealed individually and separately in a substantially oxygen impervious manner by the sheets being sealed together about each portion,
- wherein each sheet (4, 5) is formed of thermoformed polymer film and paper-based material, the polymer film being in the form of a laminate, and
- wherein each sheet (4, 5) is formed of compostable material preferably bio-sourced compostable or recyclable and/or recycled material and has a thickness between 50 and 250 $\mu$m.

FIG. 1

## Description

Field of the invention:

The invention relates to a package for storing portions of beverage precursor, such as roast-and-ground coffee compacted pieces, adapted for the preparation of a beverage in a beverage preparation device.

The invention more particularly relates to a package capable of individually storing multiple portions of beverage precursor protected from the ambient air and mechanical or physical constraints and which can be adapted to a dispensing device for dispensing the portions individually into a beverage preparation device such as a coffee machine for in-home or professional use.

Background:

It is known that coffee is sold in airtight packages to protect it from contact with air that would cause quick oxidation and loss of aromas. The field of beverage closure capsules has developed tremendously essentially because each coffee portion can be well protected by a suitable gastight, functional package until coffee is extracted in a suitable coffee machine.

US3607297 relates to a package formed of a strip comprising two foils hermetically sealed together to form pockets in which are stored individual disc-shaped portions of a beverage-producing substance or precursor. The pocket establishes a gasket in the beverage production machine and the two foils are perforated for respectively water and beverage to flow in and out of the pocket.

Therefore, the strip is designed to supply the pockets directly in the beverage machine. For this, the pockets are arranged for maintaining the beverage-producing substance inside the pocket during and after preparation. The shape of the pockets must be adapted to the beverage producing device in particular the water injection and beverage delivery plates. The material of the pockets must withstand high extraction pressure and temperature.

US8178139 and US8210097 provide respectively a spherical capsule comprising compacted aggregate of substance to be infused and a packaging envelope impermeable to air and water and a machine for automatically preparing and dispensing a beverage from such sealed capsule by puncturing the packaging envelope. The capsule is formed by a compacted aggregate of a substance to be infused held in a packaging envelope impermeable to air and water so that infusion can be carried out in the interior of the capsule. The packaging envelope is configured to burst on substantially any part of its surface when water is injected into the capsule. This solution is complex and costly because it requires packing each coffee portion individually with such envelope. Furthermore, for consistent extraction, an homogeneous envelope over its full circumference must be guaranteed which appears technically and industrially difficult to implement. Also, this solution consumes too much packaging material.

FR2879175 provides a coffee dose for automatic beverage and dispensing machines comprising an infusion chamber and a tamping position for a determined quantity of ground coffee in the infusion chamber. The coffee dose can be compacted from roast-and-ground coffee to a rolling external shape, a substantially spherical ball. The coffee dose further comprises an envelope of at least one layer or film of porous material imprisoning the coffee aggregate. However, such solution is insufficient to protect the coffee dose and furthermore each dose is not easy to handle.

Therefore, the present invention alleviates the problems of the prior art by providing a portioned packaged solution which combines at least the following advantages:

- provides easier individual handling and dispensing of the portions,
- protects the beverage precursor against external aggressions (e.g. air, shocks, etc.)
- facilitates handling and the insertion of portions in a brewing chamber of a beverage production device e.g. by avoiding pre-positioning,
- ensure consistency of the portions for the beverage extraction,
- reduces the use of packaging material,
- enables the collection of waste package after use for easier composting or recycling.

Summary of the invention:

In a first aspect, the invention relates to a package containing portions of beverage precursor for the preparation of a beverage in a beverage preparation device according to claim 1.

In more details, the beverage is prepared by mixing liquid with at least one portion of the beverage precursor which is packed in the form of a portioning band comprising a pair of packaging sheets sealed to one another for enclosing and sealing the portions individually and separately in a substantially oxygen impervious manner. The beverage precursor portions are covered on each side of the portioning band by a sheet being formed with cavities to receive a part of each portion and are sealed individually and separately in a substantially oxygen impervious manner by the sheets being sealed together about each portion.

Each sheet is formed of thermoformed polymer film and paper-based material in which the polymer film is in the form of a laminate, and each sheet is formed of compostable material preferably bio-sourced compostable or recyclable and/or recycled material and has a thickness between 50 and 250 $\mu$m.

Therefore, such configuration provides an individual protective packaging of precursor's portions which can be conveniently handled by a dispensing apparatus as well as be easily opened for the dispensing of individual spherical portions for easy positioning in the machine.

Preferably, the portioning band is substantially symmetrical with the sheets being sealed on the equatorial plane of the portions. As a result, the band can be associated to or positioned in a dispensing device from any side and any one of the packaging sheets of the portioning band which can be opened, e.g. cut for removal of the individual beverage precursor portions. The opening of the portioning band for the individual removal of a beverage precursor portion can be obtained by cutting a line or lines such as an arc-shaped line in at least one sheet about the diameter of the portion.

More specifically, the laminate comprises an oxygen barrier layer such as EVOH, PVOH, SiOx, cellophane, metal and combinations thereof.

Additionally, the laminate comprises a seal layer such as PLA, PBA, PBS, copolyester of adipidic acid, 1, 4-butanediol and dimethyl terephthalate (PBAT), polylactic acid (PLA), polyvinyl butyral (PVB), poly(vinyl acetate-ethylene) (VAE), poly(ethylene-vinyl acetate) (EVA) and combinations thereof.

In the proposed configuration, the sheets can be sealed together around each beverage precursor portion in a discrete manner, e.g., by an annular seal around each portion, or in a continuous manner, e.g., by a continuous seal surrounding each beverage precursor portion.

Preferably, the band comprises a free part of the sheets between two neighboring beverage precursor portions such that the band can be arranged in continuous manner in superimposed or wound layers with the portions being arranged in quincunx between two adjacent layers.

The storage of the band in quincunx reduces the risk of free movement of individual beverage precursor portions since the plays between the portions are limited or avoided when the layers are stacked. This result in a lower risk of damage (breaking, cracks, erosion ... ) of the compacted portions. The compactness of the package is also improved. More preferably, two neighboring portions are separated from each other by a free part of the sheets in such a manner that the ratio r of the distance between the centre of the neighboring portions and the diameter of the portion is between 1.7 and 2.0, preferably 1.8 and 1.9, most preferably 1.88. The value of the ratio $r$ may be obtained empirically by "trials and error" with the aim to ensure the band to be bent in several layers like a serpentine while the portions of two neighboring layers come precisely arranged in quincunx.

The sheet or sheets of the portioning band can so be easily cut along a cutting line proximal each beverage precursor portion by a cutting device of the portion dispensing device to remove the portions individually and separate the beverage precursor portion from the portioning band.

The cutting line is preferably located at the intersection between one formed cavity and the free part of the portioning band. In a proposed embodiment, the cutting line is a weakening line where the sheet or band is weakened.

Furthermore, each sheet has permeability to oxygen which is lower than or equal to 2 mL/m2/day/bar for a shelf life of approximately 12 months. Preferably, each portion is enclosed between the sheets with protective gas (e.g. $N_2$ and/or $CO_2$). Therefore, the portions sealed by the sheets in the package are individually preserved from oxidation for an extensive period of time. Furthermore, the sheets are preferably barrier to UV light.

As mentioned, the sheets are formed of compostable material, preferably bio-sourced compostable and/or recyclable and/or recycled material. Examples of materials are PBS, PLA, cellulose and combinations thereof.

The proposed package comprises at least one detection and/or identification element associated to the beverage precursor portion(s). The detection and/or identification element may be located on the portioning band.

It is preferred the beverage precursor is roast-and-ground coffee or comprises a mix of roast-and-ground coffee and soluble coffee or roast-and ground coffee and milk powder.

The portioning band may preferably be arranged in a continuous manner in superimposed layers within a self-standing, preferably rigid or semi-rigid protective casing. This provides a compact storage without the portioning band being directly manipulated so reducing the risk of damaging the beverage precursor portions.

Preferably, the protective casing comprises an openable gate for allowing the band to be extracted from the casing. In particular, the openable gate may form a passage which when opened has a size adapted for the portioning band to be extracted in longitudinal direction for the portions to be removed individually. This arrangement facilitates a progressive unwrapping of the portioning band while the rest of the band remains protected. In particular, the protective casing can provide main or additional protection against UV light and/or heat.

More particularly, the protective casing has a front openable wall enabling the sheets of the band to be stored inside the casing after removal of the portions. Therefore, the used band can be replaced more easily in the casing either manually or automatically by the dispensing device. For example, the openable wall can be opened by an opening member of the device automatically or manually and the used band (free of precursor portions) can fall or be pushed in the protective casing for being discarded (disposed, composted, incinerated... ).

The front openable wall comprises at least one weakened line, preferably a weakened line allowing the front wall to be opened in the middle, e.g. by a pusher, and along at least part of its height. The advantage is that the opening is easy and reliable without requiring a special tool and without risk of deforming the casing.

In particular, the protective casing can be made of compostable material, in particular one or a combination of cardboard, paper, cellulose, cellophane, PLA.

The package may comprise at least one detection and/or identification element associated to the beverage precursor portion(s). The detection and/or identification element is configured to be identified and/or recognized by a detecting and/or identifying member. For example, the detecting and/or identifying member is an optical reader and the detection and/or identification element is an optical element, such as a barcode, glyph or design, which is positioned on the portioning band. Preferably, an optical element is placed between two neighboring beverage precursor portions. The detection or identification element may provide information to the apparatus such as: the type of beverage precursor portions, the number of portions on the band, the counting of the beverage precursor portions on the band and any combinations thereof.

Brief description of the drawings:

Figure 1 shows a side view of an example of package adapted for the portioned dispensing machine of the invention;

Figure 2 shows a top plane view of one layer of the portioning band of the package of the invention;

Figure 3 shows a side view of the layer of Figure 2;

Figure 4 shows a top plane view of one layer of the portioning band of the package of the invention according to a variant;

Figure 5 shows a side view of a package of Figure 1 when the protective casing is opened;

Figure 6 is a perspective view of the protective casing of the invention;

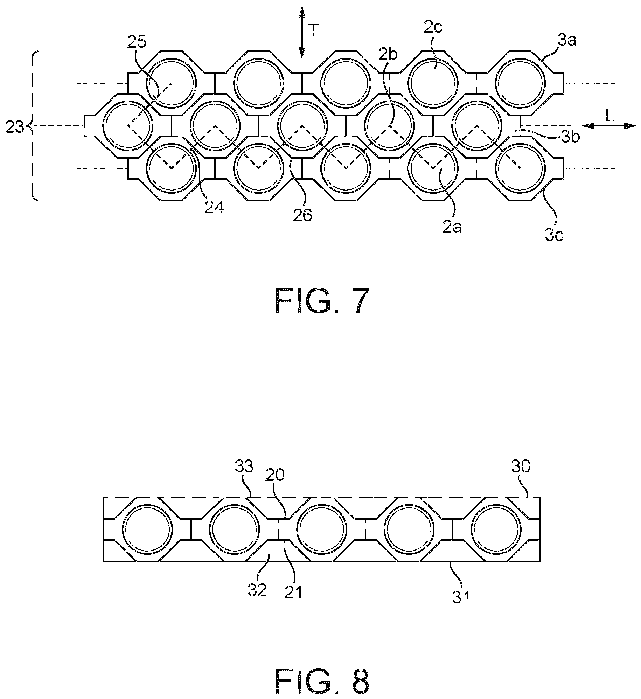

Figure 7 is a top view of several bands attached one another in form of a portioning band assembly before cutting of each protective band therefrom of Figure 4;

Figure 8 is a top view of the band of Figure 2 showing a removable part of the packaging sheets for producing the portioning band of Figure 4;

Figure 9 shows an illustration of the portion dispensing machine adapted to receive the package of the invention for individually dispensing portions from the package;

Figure 10 is a perspective view of the portion dispensing machine with a used casing and a used band stored separately;

Figure 11 is a side cross-sectional view of the portion dispensing machine in the configuration of Figure 10;

Figure 12 is a top perspective view of the dispensing machine in the configuration of Figure 10;

Figure 13 is a top perspective view of the dispensing machine after the casing is opened for receiving the used band;

Figure 14 is a partial top view of the band for the determination of the distance between the beverage precursor portions on the portioning band.

Detailed description of a preferred mode:

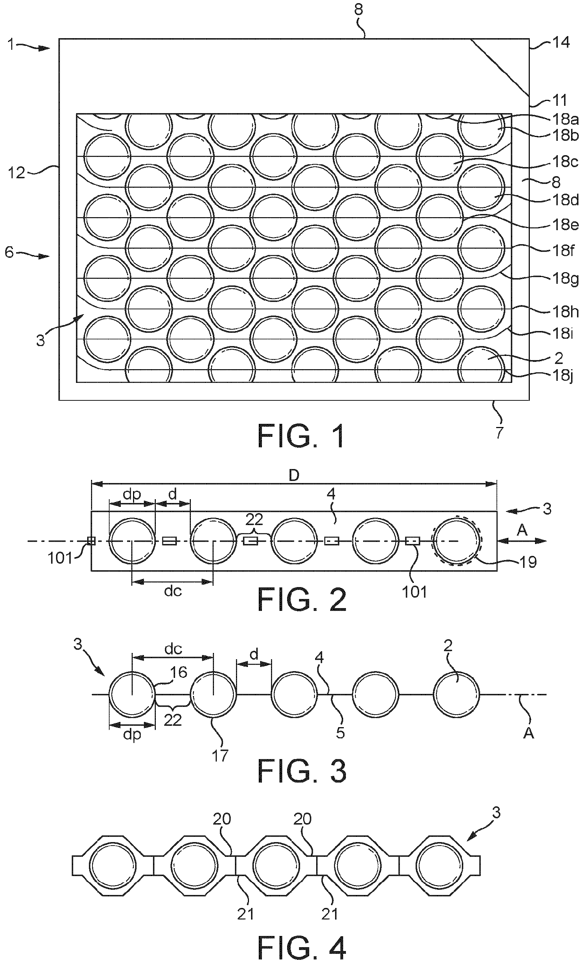

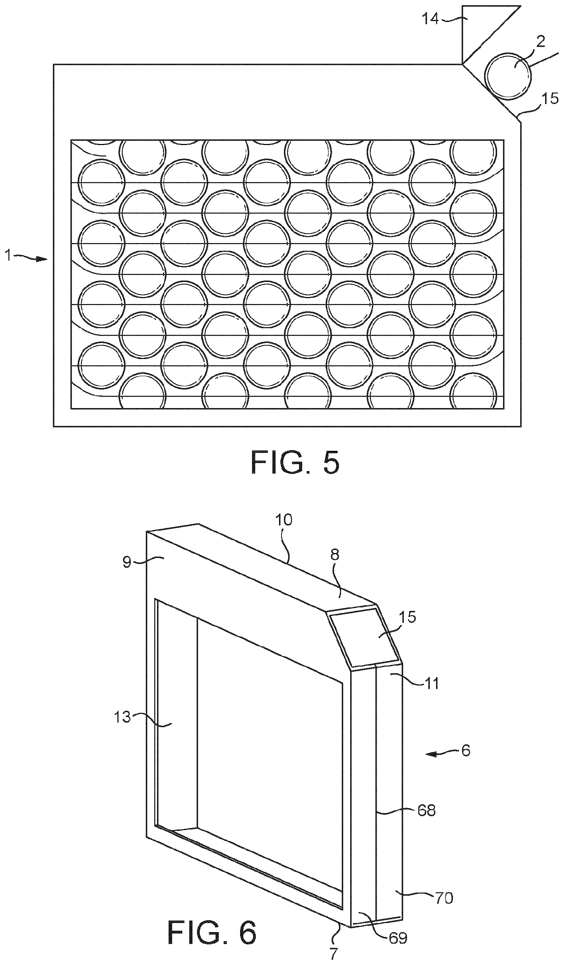

The package 1 of the invention is illustrated in Figures 1 and 5 respectively in closed position and opened position ready for dispensing portions 2 of beverage precursor imperviously sealed in at least one band 3 formed by welded or sealed sheets 4, 5. The portions of beverage precursor may also be called "beverage precursor portions" or "beverage portions" in the rest of the description.

The package may comprise a protective casing 6 that may be relatively rigid to protect the band received therein. The casing may be shaped as a box with a narrow rectangular bottom 7 and top 8, two large side walls 9, 10 and narrower front and rear walls 11, 12. The casing may optionally comprise a transparent window 13 provided on at least one of the large sidewall and/or top to enable to visualize the band of portions inside. The casing may further comprise at least one openable gate 14 for allowing the band to be progressively withdrawn from the casing during dispensing. The openable gate may be positioned in the top front corner of the casing, i.e. at the intersection between the front wall 11 and top wall 8 or in other possible locations such as lower in the front wall or more rearward in the top wall. The openable gate forms a passage 15. The size of the passage is at least sufficient to allow the band to be extracted, e.g. delayered or unwound, with one portion 2 of beverage precursor at a time. Preferably the size of the passage is adapted to the size of a single portion and is preferably slightly larger. The band can so be progressively advanced e.g. in a stepwise manner as the portions are individually removed from the band by the dispensing machine and the other portions are held in place in the protecting casing.

The openable gate 14 may be, for example, a hinged cover or corner part of the casing but it may take various configurations such as a slider, a flap, a valve, a tappet, a drawer or a simple opening.

Optionally, the protective casing 6 may comprise a weakening line 68 provided at its front wall 11 longitudinally to allow the wall to be separated in two parts 69, 70 as will be explained later.

The casing may be optional, and the package may also be formed of uniquely the portioning band 3.

Such portioning band 3 is illustrated in a first aspect in Figures 2 and 3. The band comprises a pair of packaging sheets 4, 5 which are sealed to one another and encloses a plurality of beverage portions 2.

The beverage portions are preferably spherical. In the present application, the term "spherical" encompasses also designs such as multiple facets (e.g. like a "football" shape) or a sphere having truncated faces of diameter less than the diameter of the sphere or slightly ovoid or oval or egg shapes. A preferred shape is however a ball with circular cross-sections.

The band is preferably symmetrical with the sheets being sealed on an equatorial plane (P) of the beverage portions.

The sheet 4, 5 is formed of paper-based material and a thermoformed polymer film in the form of a laminate including at least one gas barrier layer. The multilayer material of the sheets is hence oxygen impervious.

The material forming the sheets (all films and layers) is preferably compostable. The term "compostable" means that the material is substantially broken down within a few months or weeks when it is industrially composted. The material is at least about 90% composted under specific conditions within six months as determined by the method of ISO14855 or EN13432.

The laminate may comprise a seal layer such as PLA, PBA, PBS, copolyester of adipidic acid, 1, 4-butanediol and dimethyl terephthalate (PBAT), polylactic acid (PLA), polyvinyl butyral (PVB), poly(vinyl acetate-ethylene) (VAE), poly(ethylene-vinyl acetate) (EVA) and combinations thereof. It may comprise an oxygen barrier layer such as EVOH, PVOH, SiOx, cellophane, metal and combinations thereof. An example of laminate can be PLA/EVOH/PLA. In these examples, PLA may be replaced by PBA, PBS, PPS, copolyester of adipidic acid, 1, 4-butanediol and dimethyl terephthalate (PBAT), polyvinyl butyral (PVB), poly(vinyl acetate-ethylene) (VAE), poly(ethylenevinyl acetate) (EVA) and combinations thereof. EVOH may also be replaced by PVOH and/or SiOx.

The beverage portions 2 are arranged in at least one row in the longitudinal axis A of the band and are spaced apart a constant distance "d". The sheets are preferably formed with hemi-spherical cavities 16, 17 for receiving the portions therein. These cavities of the sheets can be obtained by thermoforming. The forming of the cavities to the closest shape of the portions ensures that there is as less free space as possible between the portions and the sheets so that the chance of room for residual air is reduced.

The neighboring beverage portions 2 are separated from each other by a free part of sheets in such a manner that the distance $d_c$ between the centre of the neighboring portions and the diameter $d_p$ of the portion

is between 1.7 and 2.0, preferably 1.8 and 1.9, most preferably of about 1.88. The ratio is determined to ensure proper stacking of the band but also a sufficient sealing width around each beverage precursor portion. The sheets 4, 5 can be sealed together around each beverage precursor portion in a discrete manner, e.g., by an annular seal around each portion, or in a continuous manner, e.g., by a continuous seal surrounding the portions and occupying the interspace 22 between the portions. In particular, the minimal seal width around each portion is at least 2 mm, preferably at least 3 mm, preferably of about 4 or 5 mm.

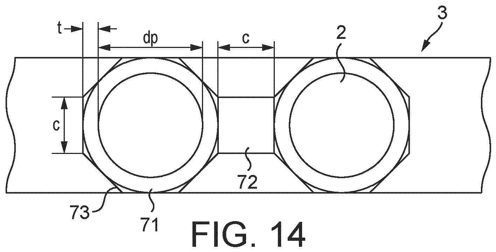

A preferred optimal determination of the ratio r can be explained in relation to figure 14. Each beverage precursor portion 2 is surrounded by a minimal annular sealing area 71 of width t. The external circular contour of the sealing area 71 is inscribed in an octagon of side c which is preferably equal to the distance c of the intermediate band portion 72 positioned between two neighboring annular sealing areas 71.

The relevant equations to be able to determine the ratio r, taking into account the radius of the inscribed circle in the virtual otagon 73, are as follows:

$$dc = dp + c + 2t$$

$$radius = \frac{dp}{2} + t = 1.2071.\,c$$

$$dc = dp + \frac{\frac{dp}{2} + t}{1.2071} + 2t$$

$$r = \frac{dc}{dp}$$

Therefore, if $t$ = 4mm and $dp$ = 25 mm, then

$$r = \frac{dc}{dp} = 1.87$$

The thickness of the sealing sheets must be determined as function of the material to ensure both a proper forming of the cavities 16, 17 as close as possible to the beverage portions and a possible opening such as by a cutting line 19. The cutting line is a virtual line where a cutting tool of the dispensing machine can apply cutting to enable the beverage portion to be removed and separated from the band. The cutting line is preferably located at the intersection between one formed cavity 16, 17 and the free part 22 of the band. The cutting line could also be a weakening line where the sheet or band is weakened (e.g. reduction of thickness) such as by laser compared to the rest of the sheet or band. As illustrated in Figures 1 and 5, the band is continuous but arranged, e.g. bent, into several superimposed layers 18a-j of determined width "D". For example, five beverage portions are arranged per band and ten layers are arranged in the casing for a total number of 50 portions of beverage precursor. Each beverage portion may contain a few grams of beverage precursors, for example 5 to 6 grams, corresponding to at least one serve of beverage. The beverage precursor is preferable essentially roast-and-ground coffee. The beverage precursor may also comprise a mix of roast-and-ground coffee and soluble coffee or roast-and ground coffee and milk powder. For example, one portion may be suitable for preparing one cup of coffee.

In the example of Figure 4, a band with reduced packaging material is proposed. The cut-outs 20, 21 are provided on each lateral sides of the band between the neighboring portions. The cut-outs are formed to reduce packaging material. The shape of each cut-out may for example be hemi-hexagonal, rectangular, squared, hemi-circular or hemi-ovoid.

The band of beverage portions of Figure 4 may be formed according to different methods.

In a first possible method, several bands 3a, 3b, 3c are cut from a larger band assembly 23 with arrays 2a, 2b, 2c of beverage portions arranged in quincunx in the longitudinal direction L (as represented by scored line 24) and in transversal direction T (as represented by scored line 25). Each band is separated from the other band of the band assembly 23 by cutting along a separation line 26 which is substantially median to two arrays (e.g. 3a-3b or 3b-3c) of beverage portions e.g. 2a, 2b or 2b, 2c.

In a second possible method, each band is produced with parallel longitudinal edges 30, 31 and the cut-outs 20, 21 are formed by removal of side portions of sheets 32, 33 between two neighboring beverage portions.

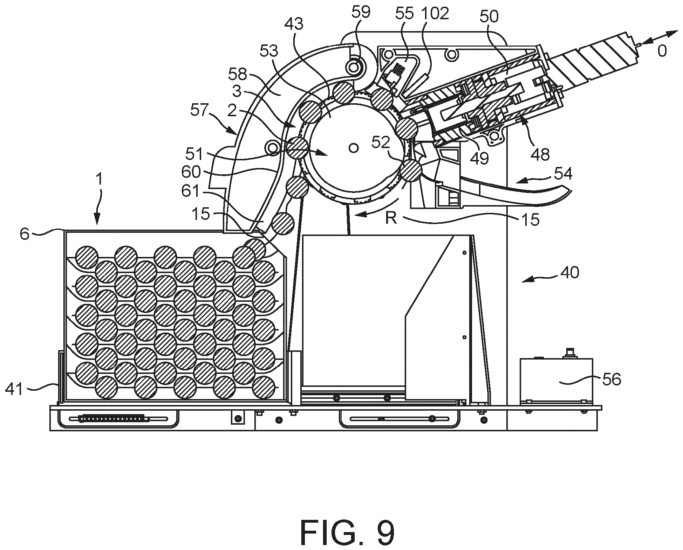

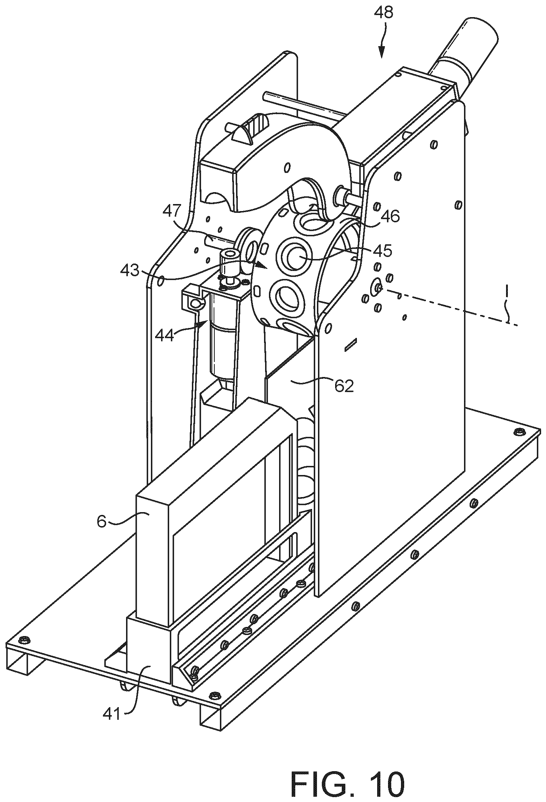

The package 1 of the invention is suitable for being associated to a portion dispensing machine 40 as illustrated in Figures 9 to 13. For this, the package is received in a receiving seat 41 of the machine in a position enabling the opening gate 14 to be close to a portion removing assembly 42 of the machine. The portion removing assembly preferably comprises a portion capturing rotary drum 43 driven in rotation in a stepwise fashion by a driving assembly 44. The rotary drum is mounted around an axle 47 of transversal axis I. The portion capturing rotary drum 43 comprises a plurality of receiving cavities 45 formed in the outer annular surface 46 of the drum. The receiving cavities are individually dimensioned and arranged at distance one another so as to match with the beverage portions of the band. As the portions are captured by the receiving cavities 45 moving step-wisely, the band 3 is progressively withdrawn from the casing.

The portion dispensing machine 40 further comprises package opening means 48 such as a cutting tool 49 arranged for opening the cavities of the band by cutting along a cutting line in the sheet or sheets to remove each beverage portion individually. The cutting tool 49 may be driven by a linear motorized actuator 50 configured for moving the cutting tool reciprocally (direction O) between a retracted position and a cutting position. The cutting tool 49 may be formed as a cylinder of diameter slightly larger than the diameter of one beverage portion and may comprise one blade or blades arranged circumferentially on the free edge of the cylinder. Preferably, the cutting tool is arranged to cut the band on at least 200° or preferably between 300 and 340° about the beverage portion to provide sufficient opening of the cavity and facilitate ejection of the beverage portion while keeping the package material in one piece.

The portion dispensing machine may further comprise portion ejection means 51 for expulsing the beverage precursor portion from the receiving cavities after the band is cut open. The portion ejection means may take various forms. In the illustrated example, the portion ejection means comprises a cam 52 which is stationary arranged on an internal bearing 53 which is arranged co-centrically relative to the rotary drum. The cam 52 is preferably positioned angularly, e.g. an angle of 50-80 degrees after the cutting tool, to push the portion outside the receiving cavity as the drum rotates (as illustrated in Figure 9 in clockwise direction R).

The portion dispensing machine may further comprise a portion collecting means 54, such as a chute and the like, arranged for gently receiving and transporting by gravity or otherwise (e.g. air pressure), the beverage portion to a beverage brewing system or machine (not illustrated).

The machine may comprise further characteristics such as a portion presence sensor 55, command and electrical supply means 56. The portion presence sensor can be positioned above the rotary drum 43 and before the cutting tool. As a result the end of the band and/or the correct positioning of the beverage portions can be detected and a warning signal may be generated such as via a control unit.

The portion removing assembly may further comprise a guide means 57 arranged in relation to the receiving seat 41 and/or opening 15 of the package for guiding the band and beverage portions onto the rotary drum to ensure that the portions are properly guided into the receiving cavities. The guiding means 57 may be arranged with an arm 58 and a top guiding surface 60 positioned a close distance from the cavities and the beverage portions 2 fitted therein. The arm may further comprise side guiding surfaces 61 for guiding the portions or band laterally. The arm may be hinged along a transversal axle 59, e.g. placed on the top of the arm, for allowing the arm to be disengaged from the portioning band for replacing or exchanging the package.

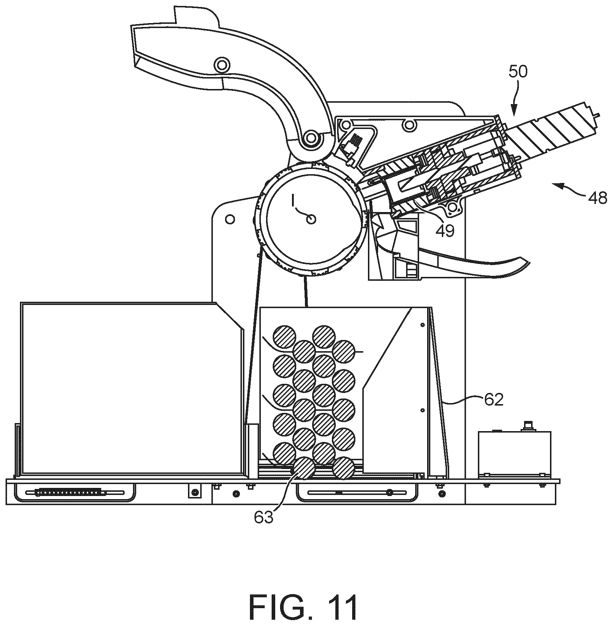

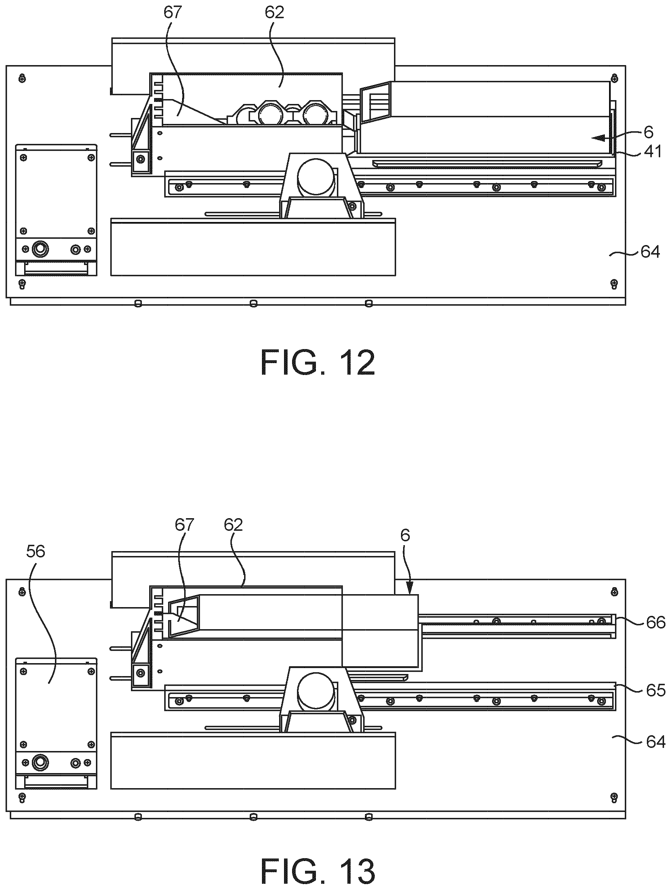

Figures 11 and 12 illustrate the portion dispensing machine 40 when the beverage portions have been removed from the band and dispensed and the used band 63 is recuperated in a waste container 62 below the portion removing assembly.

The receiving seat 41 may be mounted on a frame 64 of the machine in a linearly moveable manner between a dispensing position in which the package is positioned to feed the portion capturing drum with the band (Figure 12) and a waste collecting position in which the casing of the package collects the used band from the collecting container (Figure 13). In particular, the receiving seat may slide linearly to enter the waste container 62 along one or preferably a pair of side rails 65, 66. The waste container 62 may comprise opening means arranged for opening the protective casing of the package. The opening means may be for instance a pusher 67 which forces the used (empty) band in the protective casing. The weakening line 68 of the casing may have the form of an inverted T (or the like) to ensure the pusher can break the front wall and separate it into two equal portions such as in the manner of a "saloon door". The front wall may be arranged with the rest of the casing to provide an elastic return in closed position of the wall after removal of the pusher. As a result, the used band is securely maintained in the casing for being discarded, composted or recycled.

The receiving seat may be moved between the two positions by means of an actuator comprising a motor. Alternatively or additionally, the receiving seat can be moved manually.

The beverage precursor portions may be associated with detection or identification elements 102 positioned strategically on the band to provide information to the apparatus. The detection or identification element 102 can be detected and/or identified by a detecting and/or identifying member 103 of the apparatus. The detection or identification elements may be of optical ID element such as a barcode, design, glyph or magnetic ID element or electrically conductive ID element. The detecting and/or identifying member 103 of the apparatus may be an optical reader (e.g. camera, light beam, etc.) or an inductive detector or electrodes adapted to the type of detection or identification element 102. In a preferred mode, the detection or identification element 102 is an optical element (e.g. barcode) and the detecting and/or identifying member 103 is an optical reader (Figure 12). The detection or identification element 102 may be a single element on the band or may be multiple like, for example, a repeated element placed on the band between the neighboring beverage precursor portions such as illustrated on Figure 2. When several identification elements are present, the elements can be identical or different so as to provide same or different information to the apparatus. In the illustrated mode, each detection or identification element 102 is positioned, e.g. printed or applied otherwise, in the free part 22 of the band.

The detection or identification element 102 may provide information such as: the type of beverage precursor portions, the number of portions on the band, the counting of the portions on the band and any combinations thereof. For example, the detection or identification element 102 may have information (e.g. coded in binary manner) relating to a serial number which is unique to one band or to multiple bands. The serial number may inform the device on the number of remaining portions in the band and/or may be used for traceability reasons. A counting of the beverage precursor portions may so be enabled. The counting may provide convenient user functionalities such as the automatic reordering of new packages. The identification elements may also comprise recipe-related information such as brewing temperature(s), mixing liquid volume, brewing cycle times, etc.

## Claims

1. A package (1) containing portions (2) of beverage precursor for the preparation of a beverage in a beverage preparation device (40) by mixing liquid with at least one portion of the beverage precursor in the form of a portioning band (3) comprising a pair of packaging sheets (4, 5) sealed to one another for enclosing and sealing the portions individually and separately, wherein the beverage precursor portions (2) are covered on each side (9, 10) of the band by a sheet (4, 5) being formed with cavities (16, 17) to receive a part of each portion and are sealed individually and separately in a substantially oxygen impervious manner by the sheets being sealed together about each portion,

   - wherein each sheet (4, 5) is formed of thermoformed polymer film and paper-based material, the polymer film being in the form of a laminate, and
   - wherein each sheet (4, 5) is formed of compostable material preferably bio-sourced compostable or recyclable and/or recycled material and has a thickness between 50 and 250 $\mu$m.

2. Package according to claim 1, wherein the laminate comprises an oxygen barrier layer such as EVOH, PVOH, SiOx, cellophane, metal and combinations thereof.

3. Package according to claim 1 or 2, wherein the laminate comprises a seal layer such as PLA, PBA, PBS, copolyester of adipidic acid, 1, 4-butanediol and dimethyl terephthalate (PBAT), polylactic acid (PLA), polyvinyl butyral (PVB), poly(vinyl acetate-ethylene) (VAE), poly(ethylene-vinyl acetate) (EVA) and combinations thereof.

4. Package according to anyone of claims 1 to 3, wherein the sheets (4, 5) can be sealed together around each beverage precursor portion (2) in a discrete manner, e.g., by an annular seal around each portion, or in a continuous manner, e.g., by a continuous seal surrounding each beverage precursor portion (2).

5. Package according to claim 1, wherein the portioning band (3) is substantially symmetrical with the sheets (4, 5) being sealed on the equatorial plane (P) of the beverage precursor portions (2).

6. Package according to claims 1 or 5, wherein the portioning band (3) comprises a free part of the sheets (22) between two neighboring beverage precursor portions (2) such that the portioning band (3) can be arranged in a continuous manner in superimposed layers (18a, 18b, 18c, 18d, 18e, 18f, 18g, 18h, 18i, 18j) with the beverage precursor portions (2) being arranged in quincunx between two adjacent layers.

7. Package according to claim 6, wherein two neighboring beverage precursor portions (2) are separated from each other by free parts (22) of the sheets in such a manner that the ratio of the distance ($d_c$) between the centre of the two neighboring portions and the diameter ($d_p$) of the portion is between 1.7 and 2.0, preferably 1.8 and 1.9, most preferably about 1.88.

8. Package according to claim 1, wherein the portioning band (3) comprises a cutting line (19) proximal each beverage precursor portion (2) for removal and separation of the beverage precursor portion (2) from the portioning band (3).

9. Package according to claim 8, wherein the cutting line (19) is preferably located at the intersection between one formed cavity (16, 17) and the free part (22) of the portioning band (3).

10. Package according to claim 8 or 9, wherein the cutting line (19) is a weakening line where the sheet or band is weakened.

11. Package according to any of the preceding claims, wherein each beverage precursor portion (2) is enclosed between the sheets with protective gas (e.g. $N_2$ and/or $CO_2$).

12. Package according to any of the preceding claims, wherein the sheets are barrier to UV light.

13. Package according to any of the preceding claims, wherein it comprises at least one detection and/or identification element (102) associated to the beverage precursor portion(s) (2).

14. Package according to any of the preceding claims, wherein the detection and/or identification element (102) is located on the portioning band (3).

15. Package according to any of the preceding claims, wherein the beverage precursor is roast-and-ground coffee or comprises a mix of roast-and-ground coffee and soluble coffee or roast-and ground coffee and milk powder.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3607297 A
- US 8178139 B
- US 8210097 B
- FR 2879175